# EUROPÄISCHE PATENTSCHRIFT

(11) **EP 3 700 795 B1**
(45) Veröffentlichungstag und Bekanntmachung des Hinweises auf die Patenterteilung: **10.01.2024**
(21) Anmeldenummer: 18796602.3
(22) Anmeldetag: 22.10.2018
(51) Int. Cl.: B60W 50/14, B60W 50/16, B60W 50/04, B60W 50/00

(54) **VERFAHREN ZUM FRÜHZEITIGEN HINWEISEN AUF EINEN BETRIEBSBEREICH MIT EINEM UNZUREICHENDEN VERLÄSSLICHKEITSSTATUS EINES ASSISTENZSYSTEMS EINES FORTBEWEGUNGSMITTELS, SYSTEM UND AUTOMOBIL**
METHOD FOR THE EARLY INDICATION OF AN OPERATING RANGE WITH AN INSUFFICIENT RELIABILITY STATUS OF AN ASSISTANCE SYSTEM OF A TRANSPORTATION MEANS, SYSTEM AND AUTOMOBILE
PROCÉDÉ POUR L'INDICATION PRÉCOCE D'UNE PLAGE DE FONCTIONNEMENT D'UN SYSTÈME D'ASSISTANCE D'UN MOYEN DE TRANSPORT AYANT UN STATUT DE FIABILITÉ INSUFFISANT, SYSTÈME ET AUTOMOBILE

(30) Priorität: 25.10.2017 DE 102017219127
(43) Veröffentlichungstag der Anmeldung: 02.09.2020
(73) Patentinhaber: Volkswagen Aktiengesellschaft, 38440 Wolfsburg (DE)
(72) Erfinder: MICHAELIS, Jörn, 10785 Berlin (DE); HAN, Kyoung Sun, 14195 Berlin (DE); BAUMGARTEN, Jens, 10115 Berlin (DE)
(86) Internationale Anmeldenummer: PCT/EP2018/078873
(87) Internationale Veröffentlichungsnummer: WO 2019/081420

(56) Entgegenhaltungen:
- WO-A1-2016/170785
- DE-A1-102011 002 911
- DE-A1-102011 082 398
- DE-A1-102014 221 132
- DE-A1-102015 209 373
- DE-A1-102016 002 768
- JP-A- 2016 216 027

## Beschreibung

Die Erfindung betrifft ein Verfahren zum frühzeitigen Hinweisen auf einen Betriebsbereich mit einem unzureichenden Verlässlichkeitsstatus eines Assistenzsystems eines Fortbewegungsmittels, ein System und ein Automobil.

Aktuelle Assistenzsysteme in Fortbewegungsmitteln deaktivieren sich häufig ohne Vorankündigung beim Erreichen eines Betriebsbereiches mit einem unzureichenden Verlässlichkeitsstatus. So schaltet sich z.B. der Spurassistent bei einer nicht erkannten Spur, einem zu engen Kurvenradius bzw. bei einer zu hohen Kurvengeschwindigkeit ab und der Anwender bzw. Fahrer muss unvorbereitet und plötzlich in den Kurven das fehlende Lenkmoment ausgleichen. Daraus resultiert eine verringerte Anwenderakzeptanz bzw. ein verringerter Anwenderkomfort.

Diesbezüglich existieren mehrstufige Übernahmeaufforderungen bei Fahrzeugstudien automatisierter Fahrzeuge. Hierbei wird eine komplette Übergabe zwischen verschiedenen Automatisierungsleveln ohne Vorwarnung innerhalb einer kritischen Situation eingeleitet und nicht differenziert auf einen möglicherweise kurzzeitig benötigten aktiven Eingriff des Fahrers bei bestimmten Funktionen eingegangen.

Hinsichtlich der Interaktion zwischen Fahrer und Assistenzsystem offenbart EP 1 867 542 B1 ein Assistenzsystem, welches den Eingriff des Fahrers in kritischen Situationen und ohne Vorwarnung verhindert bzw. diesen in situ warnt.

EP 2 253 522 B1 offenbart ein Verfahren zur Warnung bzw. zum Eingriff durch das Fahrassistenzsystem, wenn ein Verlassen der Fahrspur in situ bzw. innerhalb der kritischen Situation erkannt wird. Dies bedingt, dass der Anwender sehr schnell reagieren und hochkonzentriert sein muss.

DE 10 2015 224 399 A1 offenbart ein Verfahren zur Ermittlung einer Übernahmezeit einer Fahraufgabe des Fahrassistenzsystems durch den Fahrer, wenn ein derartiges Erfordernis vorliegt. Hierbei ist es allerdings problematisch, dass diese Übergabezeit lediglich auf normierte Verkehrssituationen bzw. Umgebungen, die mit diesem Verfahren ermittelt wurden, angewandt werden kann. Hinsichtlich der vielen Verlässlichkeitsgrenzen eines Assistenzsystems, welche im realen Straßenverkehr vor allem situativ auftreten können, ist dieses normierte Verfahren jedoch nicht sicher.

DE 10 2011 002911 A1 betrifft ein Verfahren zum Führen eines Fahrzeuges in einer Fahrspur mittels eines Spurhaltesystems, bei dem das Fahrzeug durch automatische Lenkeingriffe in der Fahrspur geführt wird. Um den Fahrer rechtzeitig vor einem Ausfall des Spurhaltesystems zu warnen, wird vorgeschlagen, Daten über einen vorausliegenden Streckenabschnitt auszuwerten und daraus zu ermitteln, ob eine vorgegebene Systemgrenze des Spurhaltesystems beim Durchfahren des Streckenabschnitts überschritten werden wird, und ein Signal an den Fahrer auszugeben, wenn festgestellt wird, dass die vorgegebene Systemgrenze voraussichtlich überschritten werden wird.

DE 10 2015 209373 A1 beschreibt eine Berechnungswertermittlungseinheit, die einen Berechnungswert ermittelt, der einen Grad anzeigt, bis zu dem eine Fahrunterstützung geeignet am eigenen Fahrzeug durchgeführt werden kann, in einem Fahrgebiet, von welchem angenommen wird, dass das eigene Fahrzeug dies durchfährt. Die Benachrichtigungseinheit gibt im Voraus eine Benachrichtigung vom Berechnungswert aus, der durch die Berechnungswertermittlungseinheit erfasst wird, bevor das eigene Fahrzeug in das Fahrgebiet einfährt.

DE 10 2011 082398 A1 betrifft eine Recheneinheit, ein Computerprogrammprodukt und ein Verfahren zum Darstellen eines Navigationshinweises, wobei anhand einer Fahrroute angezeigt wird, in welchem Abschnitt einer Fahrroute eine Zusatzinformation für ein Fahrerassistenzsystem vorhanden ist.

DE 10 2014 221132 A1 betrifft ein Verfahren zum Anzeigen einer Verfügbarkeit eines ersten Fahrmodus eines Fahrzeugs, wobei das Fahrzeug zumindest in dem ersten Fahrmodus, in welchem das Fahrzeug zumindest teilweise automatisch geführt wird, und in einem zweiten Fahrmodus, in welchem das Fahrzeug nicht automatisch geführt wird, betreibbar ist. Bei dem Verfahren wird erfasst, ob sich das Fahrzeug in dem ersten oder dem zweiten Fahrmodus befindet. Es werden erste Umgebungsdaten aus der Umgebung des Fahrzeugs ermittelt. Wenn erfasst worden ist, dass sich das Fahrzeug in dem zweiten Fahrmodus befindet, wird anhand der ersten Umgebungsdaten ein Beginn eines Streckenabschnitts prognostiziert, ab dem der erste Fahrmodus verfügbar ist. In Abhängigkeit von dem prognostizierten Beginn des Streckenabschnitts wird der prognostizierte Beginn des Streckenabschnitts in einer ersten Darstellungsweise dargestellt.

Ausgehend vom vorgenannten Stand der Technik ist es daher Aufgabe der vorliegenden Erfindung, ein Verfahren anzugeben, welches die genannten Nachteile lindert bzw. ausräumt. Ferner ist es Aufgabe der vorliegenden Erfindung, ein System anzugeben, welches eingerichtet ist, das Verfahren auszuführen sowie ein Automobil anzugeben, welches ein derartiges System umfasst.

### Offenbarung der Erfindung

Die vorgenannte Aufgabe wird erfindungsgemäß durch den Gegenstand des Anspruches 1 gelöst. Gemäß einem ersten Aspekt betrifft die vorliegende Erfindung ein Verfahren zum frühzeitigen Hinweisen auf einen Betriebsbereich mit einem unzureichenden Verlässlichkeitsstatus eines Assistenzsystems eines Fortbewegungsmittels.

Die Terminologie "Betriebsbereich mit einem unzureichenden Verlässlichkeitsstatus eines Assistenzsystems" oder "Fehlfunktion eines Assistenzsystems" beschreibt Zustände eines Assistenzsystems eines Fortbewegungsmittels, in denen dessen volle Funktionsfähigkeit nicht mehr vorhanden ist. Mit anderen Worten wird die Sicherheit des Anwenders und der Verkehrsumgebung gefährdet, da das Assistenzsystem das Fahrverhalten des Fortbewegungsmittels nicht mehr ausreichend steuert. In der Folge seien zum besseren Verständnis der Erfindung einige Konkretisierungen genannt, welche unter "einen Betriebszustand mit einem unzureichenden Verlässlichkeitsstatus" eines Assistenzsystems subsumierbar sind. Beispiele sind ein zu enger Kurvenradius und/oder eine zu hohe Geschwindigkeit des Fortbewegungsmittels und/oder eine nicht erkannte Spur, bei denen sich der Spurassistent jeweils zumindest temporär deaktiviert. Als weiteres Beispiel, welches eine Störung bzw. einen unzureichenden Verlässlichkeitsstatus eines Assistenzsystems verursachen kann, sei eine Wetterlage, wie beispielsweise Nebel, genannt, wenn als Sensor eine Kamera verwendet wird. Wenn ein Radarsensor verwendet wird, kann beispielsweise ein hohes Metallaufkommen, z.B. an einer Baustelle mit vielen metallischen Baugeräten, einen derartigen Betriebszustand mit unzureichendem Verlässlichkeitsstatus verursachen.

Als Fortbewegungsmittel im Sinne der vorliegenden Erfindung kommen zum Beispiel Automobile, insbesondere PKW und/oder LKW, und/oder Flugzeuge und/oder Schiffe und/oder Motorräder infrage. Ferner kann ein Assistenzsystem des Fortbewegungsmittels eine vollautomatisierte und/oder teilautomatisierte Funktion eines Fortbewegungsmittels sein, welche vorzugsweise einen aktiven Eingriff bzw. einen die Assistenzfunktion ergänzenden bzw. korrigierenden Eingriff des Anwenders erlaubt. Beispiele für derartige Assistenzsysteme sind ein Spurassistenzsystem und/oder ein adaptives Geschwindigkeitsregelungssystem und/oder ein Reiseassistenzsystem und/oder ein Einparkassistenzsystem.

In einem ersten Schritt umfasst das erfindungsgemäße Verfahren ein Analysieren einer Situation und/oder Umgebung des Fortbewegungsmittels in Bezug auf das Assistenzsystem durch eine Sensorik des Fortbewegungsmittels. Eine derartige Sensorik kann beispielsweise optisch (z.B. über eine Kamera) und/oder akustisch (z.B. über einen Ultraschallsensor) und/oder radiometrisch (z.B. über einen Radarsensor) ausgestaltet sein. Unter einer "Situation" wird in der vorliegenden Beschreibung ein zeitliches Phänomen, welches durch zeitliche Umstände entsteht, z.B. ein hohes Verkehrsaufkommen, verstanden. Unter "Umgebung" wird die räumliche Umgebung, z.B. der Verlauf einer Kurve auf einer Fahrbahn und/oder die Anordnung fortbewegungsführungsrelevanter Objekte relativ zum Fahrzeug, verstanden.

In einem zweiten Schritt erfolgt ein Vergleichen der durch die Sensorik analysierten Situation und/oder Umgebung mit einer vordefinierten Referenz umfassend kartographische Daten. Die vordefinierte Referenz kann beispielsweise auf einem Speicher des Fortbewegungsmittels hinterlegt sein. Als Beispiel für die vordefinierte Referenz seien kartographische Daten Referenzdaten bezüglich zu enger Kurvenradien für ein Spurassistenzsystem genannt. Hierbei können beispielsweise ein durch eine Kamera analysierter Straßenverlauf und daraus berechnete Kurvenradien mit der entsprechenden Referenz des Spurassistenzsystems und den kartographischen Daten abgeglichen werden. Dies kann über eine Auswerteinheit (z.B. eine CPU und/oder einen Mikrocontroller) des Fortbewegungsmittels erfolgen. Die kartographischen Daten dienen zur Unterstützung des Ermittelns des zeitlich und/oder räumlich entfernten Eintretens des unzulässigen Betriebszustandes. Ferner kann anhand der kartographischen Daten eine fehlerhafte Analyse der Sensorik ausgeglichen werden. Weiterhin wird durch die kartographischen Daten die Darstellung für den Anwender vereinfacht, da diese beispielsweise gemeinsam mit dem ermittelten Betriebszustand mit dem unzureichenden Verlässlichkeitsstatus ausgegeben werden können. Die kartographischen Daten können über eine Drahtloskommunikation bezogen werden und/oder bereits werksseitig eingegeben werden und auf einem Speicher hinterlegt sein.

In einem dritten Schritt erfolgt in Abhängigkeit des Vergleiches ein Ermitteln, ob ein vordefinierter zeitlicher und/oder räumlicher Bezug zu dem Betriebsbereich mit einem unzureichenden Verlässlichkeitsstatus des Assistenzsystems vorliegt. Dementsprechend wird anhand des Vergleichs festgestellt, ob überhaupt ein Betriebsbereich mit einem unzureichenden Verlässlichkeitsstatus vorliegt. Dies kann beispielsweise anhand eines durch die Kamera analysierten und anschließend über eine Auswerteeinheit ermittelten Kurvenradius' erfolgen, welcher nach dem Vergleich mit Referenzdaten als zu eng für das Spurassistenzsystem eingestuft wird. Liegt ein Betriebsbereich mit einem unzureichenden Verlässlichkeitsstatus vor, so wird der räumliche (z.B. der Abstand zum Ort des Auftretens des Betriebszustandes in Bezug auf das Fortbewegungsmittel in Metern) und/oder zeitliche (z.B. anhand der Zeitspanne, in welcher der Betriebsbereich erreicht wird, was anhand der Geschwindigkeit errechnet werden kann) Bezug zu diesem Betriebsbereich ermittelt. Ist dieser räumliche und/oder zeitliche Bezug gleich oder kleiner einem vordefinierten räumlichen bzw. zeitlichen Bezug, so wird im Ansprechen darauf in einem weiteren Schritt ein Hinweis an den Anwender ausgegeben, dass ein vordefinierter räumlicher und/oder zeitlicher Bezug zu dem Betriebsbereich mit einem unzureichenden Verlässlichkeitsstatus des Assistenzsystems vorliegt. Dieser Hinweis kann optisch (z.B. über eine Textanzeige und/oder eine Grafik auf einem Display) und/oder akustisch (z.B. über einen vordefinierter Warnton) und/oder haptisch (z.B. über eine Vibration des Fahrersitzes) ausgegeben werden. Beispielsweise kann auf einem Display der Kurvenverlauf rot dargestellt werden, wenn dieser zu eng ist und das Spurassistenzsystem sich in einem solchen Fall partiell oder vollständig beim Erreichen der Kurve deaktiviert. Mit anderen Worten wird der Anwender rechtzeitig darauf hingewiesen, dass eine Fehlfunktion des Assistenzsystems in einer räumlichen (z.B. in 100 m) und/oder einer zeitlichen Entfernung (z.B. in 30 s) bevorsteht. Mit noch anderen Worten wird der Anwender abhängig von einem konkreten räumlich entfernten Ort und/oder abhängig von einer konkreten bevorstehenden zeitlichen Situation gewarnt, dass sein Assistenzsystem teilweise oder vollständig ausfällt. Dies hat den Vorteil, dass der Anwender seine Aufmerksamkeit und sein Fahrverhalten rechtzeitig und entsprechend einer bevorstehenden Situation und/oder Umgebung einstellen kann, was zu einem erhöhten Grad an Flexibilität und Sicherheit führt. Weiterhin stellt die erfindungsgemäße Ausgabe eines Hinweises keine Übernahmeaufforderung dar. Der Fahrer hat nach wie vor die Wahlmöglichkeit, ob er lediglich in der Situation, in welcher der Betriebsbereich mit einem unzureichenden Verlässlichkeitsstatus auftritt, soweit es erforderlich ist, eingreifen oder die Assistenzfunktion vollständig übernehmen oder sogar, wenn möglich, die Situation umfahren bzw. durch Anpassung seines Verhaltens (z.B. Verringerung der Geschwindigkeit) vermeiden möchte.

Nach einer anderen vorteilhaften Weiterbildung des erfindungsgemäßen Verfahrens umfasst der Hinweis keine Aufforderung zur Übernahme einer Funktion des Assistenzsystems. Wie bereits beschrieben, hat der Anwender weiterhin die Möglichkeit, die deaktivierte Funktion des Fahrassistenzsystems situativ, d.h. in der Situation, in welcher der Betriebszustand mit einer unzureichenden Verlässlichkeit auftritt, nach dem vorher erfolgten Hinweis zu übernehmen, wonach das Assistenzsystems die Aufgabe wieder übernimmt. Ferner kann der Anwender auch bei Bedarf die Funktion des Assistenzsystems vollständig übernehmen. Ansonsten bleibt vorzugsweise die jeweilige Funktion des Assistenzsystems, außer in der konkreten Situation des Betriebszustandes mit einer unzureichenden Verlässlichkeit, aktiv. Der Anwender hat zudem die Wahlmöglichkeit, den Ort bzw. die Situation, in der die Fehlfunktion auftritt, räumlich zu umfahren, soweit dies möglich ist, und/oder sein Fahrverhalten, soweit dies möglich ist, entsprechend anzupassen, damit der Betriebszustand mit dem unzureichenden Verlässlichkeitsstatus nicht auftritt. Letzteres ist beispielsweise möglich, wenn das Spurassistenzsystem sich in einer Kurve aufgrund einer zu hohen Geschwindigkeit deaktivieren würde. Alternativ oder zusätzlich umfasst der Hinweis eine graphische Darstellung der Spurmarkierung und/oder von Objekten, beispielsweise anderer Fortbewegungsmittel, in der Umgebung. Die graphische Darstellung kann einen Farbwechsel und/oder ein Blinken und/oder ein größenmäßiges Hervorheben und/oder ein Umrahmen und/oder ein Schraffieren eines Bereiches der graphischen Darstellung umfassen. Dadurch kann der Hinweis noch besser/intuitiver durch den Anwender wahrgenommen werden.

In einer weiteren vorteilhaften Ausgestaltung erfolgt das Ermitteln anhand eines Kontrastes und/oder anhand einer Entfernung und/oder anhand einer Komplexität der Situation und/oder anhand eines Signal-zu-Rausch-Verhältnisses in Bezug auf das Fahrassistenzsystem. Welche Observable zum Ermitteln eines Betriebsbereiches mit einem unzulässigen Verlässlichkeitsstatus verwendet wird, hängt entsprechend von der verwendeten Sensorik und von den verwendeten Assistenzsystemen ab. So können die hier genannten Sensoren bezüglich der Komplexität einer Situation, z.B. eines hohen Verkehrsaufkommens, für alle hier möglichen Assistenzsysteme beliebige Observablen, z.B. Abstände anderer Fortbewegungsmittel, analysieren. Das Ermitteln eines räumlichen und/oder zeitlichen Bezugs zu dem Betriebsbereich mit einem unzulässigen Verlässlichkeitsstatus kann anhand dieser Observablen für das jeweilige Assistenzsystem erfolgen. Bei optischen Sensoren findet das Ermitteln vorzugsweise anhand eines Kontrastes statt. Bei radiometrischen und/oder optischen und/oder akustischen Sensoren kann das Ermitteln beispielsweise anhand einer Entfernung stattfinden. Bei einem Einparkassistenzsystem kann das Ermitteln der Fehlfunktion des Assistenzsystems beispielsweise anhand eines Signal-zu-Rausch-Verhältnisses erfolgen.

Nach einer anderen vorteilhaften Weiterbildung des erfindungsgemäßen Verfahrens umfasst der Hinweis keine Aufforderung zur Übernahme einer Funktion des Assistenzsystems. Wie bereits beschrieben, hat der Anwender weiterhin die Möglichkeit, die deaktivierte Funktion des Fahrassistenzsystems situativ, d.h. in der Situation, in welcher der Betriebszustand mit einer unzureichenden Verlässlichkeit auftritt, nach dem vorher erfolgten Hinweis zu übernehmen, wonach das Assistenzsystems die Aufgabe wieder übernimmt. Ferner kann der Anwender auch bei Bedarf die Funktion des Assistenzsystems vollständig übernehmen. Ansonsten bleibt vorzugsweise die jeweilige Funktion des Assistenzsystems, außer in der konkreten Situation des Betriebszustandes mit einer unzureichenden Verlässlichkeit, aktiv. Der Anwender hat zudem die Wahlmöglichkeit, den Ort bzw. die Situation, in der die Fehlfunktion auftritt, räumlich zu umfahren, soweit dies möglich ist, und/oder sein Fahrverhalten, soweit dies möglich ist, entsprechend anzupassen, damit der Betriebszustand mit dem unzureichenden Verlässlichkeitsstatus nicht auftritt. Letzteres ist beispielsweise möglich, wenn das Spurassistenzsystem sich in einer Kurve aufgrund einer zu hohen Geschwindigkeit deaktivieren würde. Alternativ oder zusätzlich umfasst der Hinweis eine graphische Darstellung der Spurmarkierung und/oder von Objekten, beispielsweise anderer Fortbewegungsmittel, in der Umgebung. Die graphische Darstellung kann einen Farbwechsel und/oder ein Blinken und/oder ein größenmäßiges Hervorheben und/oder ein Umrahmen und/oder ein Schraffieren eines Bereiches der graphischen Darstellung umfassen. Dadurch kann der Hinweis noch besser/intuitiver durch den Anwender wahrgenommen werden.

In einer weiteren vorteilhaften Ausgestaltung erfolgt das Ermitteln anhand eines Kontrastes und/oder anhand einer Entfernung und/oder anhand einer Komplexität der Situation und/oder anhand eines Signal-zu-Rausch-Verhältnisses in Bezug auf das Fahrassistenzsystem. Welche Observable zum Ermitteln eines Betriebsbereiches mit einem unzulässigen Verlässlichkeitsstatus verwendet wird, hängt entsprechend von der verwendeten Sensorik und von den verwendeten Assistenzsystemen ab. So können die hier genannten Sensoren bezüglich der Komplexität einer Situation, z.B. eines hohen Verkehrsaufkommens, für alle hier möglichen Assistenzsysteme beliebige Observablen, z.B. Abstände anderer Fortbewegungsmittel, analysieren. Das Ermitteln eines räumlichen und/oder zeitlichen Bezugs zu dem Betriebsbereich mit einem unzulässigen Verlässlichkeitsstatus kann anhand dieser Observablen für das jeweilige Assistenzsystem erfolgen. Bei optischen Sensoren findet das Ermitteln vorzugsweise anhand eines Kontrastes statt. Bei radiometrischen und/oder optischen und/oder akustischen Sensoren kann das Ermitteln beispielsweise anhand einer Entfernung stattfinden. Bei einem Einparkassistenzsystem kann das Ermitteln der Fehlfunktion des Assistenzsystems beispielsweise anhand eines Signal-zu-Rausch-Verhältnisses erfolgen.

Vorteilhaft umfasst das Assistenzsystem des erfindungsgemäßen Verfahrens ein Spurassistenzsystem und/oder ein adaptives Geschwindigkeitsregelungssystem und/oder ein Reiseassistenzsystem und/oder ein Einparkassistenzsystem. Als Reiseassistenzsystem (Travel Assist) wird ein vollautomatisiertes und/oder teilautomatisiertes Assistenzsystem verstanden, wodurch ein weitgehend autonomes Fahren ermöglicht wird. Hierbei ist es z.B. denkbar, dass durch das Setzen eines Blinkers durch den Anwender beim Fahren hinter einem anderen Fortbewegungsmittel ein Überholvorgang durch das Reiseassistenzsystem autonom durchgeführt und abgeschlossen wird.

In einer anderen vorteilhaften Ausgestaltung umfasst die Sensorik optische Sensoren, insbesondere Kameras, und/oder akustische Sensoren, insbesondere Ultraschallsensoren, und/oder radiometrische Sensoren, insbesondere Radarsensoren und/oder Lidarsensoren. Als Kameras kommen beispielsweise Stereokameras und/oder Nahbereichskameras und/oder Infrarotkameras infrage. Hierdurch können sowohl Nah- als auch Fernabstände effizient analysiert werden.

Ferner vorteilhaft umfasst das erfindungsgemäße Verfahren den Schritt eines Quittierens einer vorgeschlagenen temporären Deaktivierung bzw. Teildeaktivierung des Assistenzsystems und/oder einer Abfrage einer Übernahmebereitschaft hinsichtlich einer Funktion des Assistenzsystems. Die Vorschläge seitens des Systems für die Quittierung durch den Anwender können akustisch und/oder haptisch und/oder optisch erfolgen. Optisch können die Vorschläge beispielsweise über eine Textausgabe auf einer Anzeigeeinheit erfolgen. Akustisch können die Vorschläge beispielsweise durch eine Sprachausgabe, z.B. "möchten Sie die Aufgaben des Assistenzsystems übernehmen?", dargestellt werden. Haptisch können Vorschläge z.B. durch ein aufmoduliertes Rütteln eines Pedals erfolgen. Das Quittieren ist akustisch, z.B. per Spracheingabe, und/oder haptisch und/oder durch frei ausgeführte Gesten denkbar. Beispielsweise kann ein haptisches Quittieren das Betätigen eines Bedienelements des Fortbewegungsmittels, z.B. eines Touchscreens, und/oder eines Hebels und/oder eines physischen Buttons durch den Anwender umfassen. Eine frei ausgeführte Geste kann hierbei eine Tipp-Geste und/oder eine Swipe-Geste und/oder eine Pinch-Geste und/oder Spread-Geste und/oder ein Ballen einer Faust und/oder einen Augenaufschlag umfassen, was beispielsweise durch einen optischen Sensor, z.B. eine Kamera, erfasst und über eine Auswerteeinheit (z.B. eine CPU und/oder einen Mikroprozessor) ausgewertet werden kann. Hierbei kommt einmal mehr die Wahlmöglichkeit des Anwenders zum Ausdruck, ob er einer temporäre Deaktivierung des Assistenzsystems bedarf bzw. ob er alle Funktionen oder nur einige Funktionen des Assistenzsystems permanent übernehmen möchte. Im Ansprechen auf ein Quittieren seitens des Anwenders wird hierbei das Assistenzsystem deaktiviert und/oder teildeaktiviert und/oder der Fahrer kann die Funktionen des Fahrassistenzsystems wieder vollständig übernehmen. Vorschläge zur Quittierung kann der Anwender vorzugsweise nach eigenem Bedarf hinsichtlich des konkreten Betriebszustandes mit dem unzureichenden Verlässlichkeitsstatus des Assistenzsystems konfigurieren.

Das erfindungsgemäße Verfahren umfasst weiterhin den Schritt eines Ausgebens einer situativen bzw. aktuellen Anzeige bezüglich einer Funktionsgüte eines Assistenzsystems. Dies erfolgt bevorzugt unabhängig von einer kritischen Situation bzw. unabhängig von einem vorausliegenden Betriebsbereich mit einem unzureichenden Verlässlichkeitsstatus eines Assistenzsystems. Das Ausgeben der situativen bzw. aktuellen Anzeige kann beispielsweise optisch erfolgen. Denkbar ist hierbei eine Headroom-Anzeige bezüglich der Funktionsgüte der Umgebungssensorik des jeweiligen Assistenzsystems. Hierbei ist beispielsweise für optimale sensorische Bedingungen eine Headroomanzeige in grün möglich, während ein weniger optimaler Bereich des Verlässlichkeitsstatus des Assistenzsystems in z.B. gelb bzw. orange charakterisiert werden kann. Sollten die sensorischen Bedingungen wieder besser werden, kann die Farbe von orange beispielsweise wieder in gelb bzw. grün umschlagen. Eine Übernahmeaufforderung ergeht hier insbesondere nicht. Vorteilhafterweise kann ein Verlauf der Funktionsgüte dokumentiert werden. Hierbei kann der dokumentierte Verlauf dazu verwendet werden, um weniger günstige Umstände der Umgebungssensorik zu erkennen und Übernahmebedarf durch den Anwender früher anzuzeigen. Zudem kann durch das vorzugsweise intuitive Erlernen seitens des Anwenders eine verbesserte Einschätzung von Situationen bezüglich der Güte des Assistenzsystems erzielt werden. Gegebenenfalls kann der Anwender hierdurch eine sensorisch einfachere bzw. besser erfassbare Route wählen.

In einer vorteilhaften Ausgestaltung umfasst das erfindungsgemäße Verfahren ferner den Schritt des Aufzeichnens eines Verlaufes der Betriebsbereiche mit einem unzureichenden Verlässlichkeitsstatus und/oder eines Verlaufes der Funktionsgüte. Der aufgezeichnete Verlauf kann beispielsweise in einem Speicher des Fortbewegungsmittels hinterlegt werden. Die Aufzeichnung erfolgt anhand der durch die Sensorik analysierten und über das erfindungsgemäße Verfahren ermittelten Betriebszustände mit einem unzureichenden Verlässlichkeitsstatus im Hinblick auf das Assistenzsystem. Beispielsweise können auf einer Strecke sämtliche Funktionsfehler des Assistenzsystems als Verlauf dokumentiert werden. Ein derartiger Verlauf kann beispielsweise einer Werkstatt zur einfacheren Fehlersuche dienen und/oder dazu beitragen, einer Entwicklungsabteilung Analysedaten zur Verbesserung von Assistenzsystemen für Fortbewegungsmittel bereitzustellen. Derartige Verläufe können beispielsweise auch über eine Drahtloskommunikation an eine digitale Datenbank gesendet werden, um diese Verläufe beispielsweise auch weiteren Anwendern und/oder der Öffentlichkeit und/oder Werkstätten und/oder Entwicklungsabteilungen bereitzustellen. Ferner werden aufgezeichnete Verläufe auf derselben Strecke, welche mehrmals gefahren wurde (z.B. ein Arbeitsweg) miteinander verglichen bzw. korreliert, um eine Häufigkeit bezüglich der Betriebszustände mit einem unzureichenden Verlässlichkeitsstatus zu errechnen. Weiterhin umfasst das erfindungsgemäße Verfahren zudem einen Schritt eines Ausgebens einer kartographischen Darstellung basierend auf den aufgezeichneten Verlauf der Betriebsbereiche der unzureichenden Verlässlichkeitsstatus. Die kartographische Darstellung kann über die oben genannten optischen Einrichtungen zur Ausgabe (z.B. über ein zentrales Informationsdisplay) erfolgen. Die kartographische Darstellung kann beispielsweise die einfache Ausgabe der Fehlfunktionen auf der kartographisch dargestellten, z.B. einmal gefahrenen, Strecke umfassen. Die Fehlfunktionen können beispielsweise als Icons und/oder als interaktive Icons dargestellt werden. Bei der Darstellung als interaktive Icons kann der Anwender beispielsweise durch betätigen des Icons weitere Informationen z.B. welches Assistenzsystem ausgefallen ist und weswegen, erhalten. Eine derartige kartographische Darstellung wird in Form einer Heatmap bezüglich der Häufigkeit der örtlichen Fehlfunktionen des Assistenzsystems ausgegeben, welche in den korrelierten Verläufen dokumentiert sind. Demzufolge erfolgt die kartographische Darstellung in einer farblichen Repräsentation. Weiterhin kann die Darstellung der Häufigkeit auch über eine dreidimensionale Höhen-Tiefen-Darstellung auf der Karte erfolgen. Mit einer hinreichenden Datenmenge, welche beispielsweise über besagte digitale Datenbank abgerufen werden kann, kann eine kartographische Darstellung auch uhrzeit- bzw. wochen- bzw.- monats- bzw. jahresabhängig erfolgen. Es ist zudem möglich, die Häufigkeit der Fehlfunktionen numerisch auf der Karte darzustellen. Somit hat der Anwender bei Bedarf die Möglichkeit, Lokalitäten, in denen die Fehlfunktionen vermehrt auftreten, gezielt zu umfahren.

In einer weiteren vorteilhaften Ausgestaltung befindet sich der vordefinierte räumliche und/oder zeitliche Bezug zu dem Betriebsbereich mit dem unzureichenden Verlässlichkeitsstatus des Assistenzsystems in einer räumlichen bzw. zeitlichen Entfernung ausgehend von dem Fortbewegungsmittel. Hierbei kann die räumliche Entfernung die Luftlinienentfernung und/oder die Wegstrecke umfassen. Die zeitliche Entfernung kann hierbei die Idealzeit, beispielsweise, wenn kein Stau vorhanden ist, oder die Realzeit, beispielsweise unter Berücksichtigung des Verkehrs umfassen. Die räumliche Entfernung kann 10 bis 30 m oder 50 m bis 100 m oder 200 m bis 1000 m umfassen. Ferner kann die räumliche Entfernung 10 bis 5000 m, bevorzugt 100 bis 4000 m und besonders bevorzugt 200 bis 3000 m umfassen. Zudem sind als obere Grenze 500 m denkbar. Die zeitliche Entfernung kann 5 s bis 400 s, bevorzugt 15 s bis 300 s besonders bevorzugt 30 s bis 100 s umfassen. Ferner ist auch eine zeitliche Entfernung von 60 s bis 100 s möglich. Durch die entsprechenden Entfernungen kann unter Berücksichtigung der Tatsache, wie kritisch der unzuverlässige Betriebsbereich ist, dem Anwender rechtzeitig Bescheid gegeben werden, damit dieser sein Fahrverhalten anpassen kann. Hierbei kommen zur Ermittlung der räumlichen und/oder zeitlichen Entfernung sämtliche hier erwähnten Sensoren infrage. Ferner können ergänzend auch kartographische Daten und/oder GPS-Daten und/oder weitere Daten, welche durch ein Drahtlosnetzwerk empfangbar sind, eingesetzt werden.

Die folgenden erfindungsgemäßen Aspekte umfassen die vorteilhaften Ausgestaltungen und Weiterbildungen sowie die generellen Vorteile der erfindungsgemäßen Vorrichtung und die jeweils damit verbundenen technischen Effekte gleichsam. Dies sei insbesondere zur Vermeidung von Wiederholungen erwähnt.

Gemäß einem zweiten Aspekt betrifft die vorliegende Erfindung ein System, welches eingerichtet ist, ein Verfahren gemäß dem ersten Erfindungsaspekt durchzuführen. Ein derartiges System umfasst insbesondere einen Eingang (z.B. einen wie oben beschriebenen Sensor) und eine Auswerteeinheit (z.B. eine CPU und/oder einen Mikrocontroller) und einen Ausgang (z.B. ein zentrales Informationsdisplay).

Gemäß einem dritten Aspekt betrifft die vorliegende Erfindung ein Automobil, welches das erfindungsgemäße System gemäß dem zweiten Erfindungsaspekt umfasst.

### Kurzbeschreibung der Zeichnungen

Nachfolgend werden Ausführungsbeispiele der vorliegenden Erfindung anhand der beigefügten Zeichnungen im Detail beschrieben. In den Zeichnungen ist:
- Figur 1: ein Flussdiagramm einer Ausführungsform des erfindungsgemäßen Verfahrens;
- Figur 2: eine Ausführungsform des erfindungsgemäßen Automobils;
- Figur 3a: eine Verbildlichung des Schrittes der Ausgabe eines Hinweises auf eine bevorstehende Deaktivierung eines Spurassistenzsystems gemäß einer Ausführungsform des erfindungsgemäßen Verfahrens;
- Figur 3b: eine Verbildlichung des darauf folgenden Schrittes eines Erreichens eines

Deaktivierungsbereiches des Spurassistenzsystems gemäß einer Ausführungsform des erfindungsgemäßen Verfahrens; und

Figur 4eine Verbildlichung des Schrittes der Ausgabe eines Hinweises auf eine bevorstehende Deaktivierung des adaptiven Geschwindigkeitsregelungssystems gemäß einer Ausführungsform des erfindungsgemäßen Verfahrens.

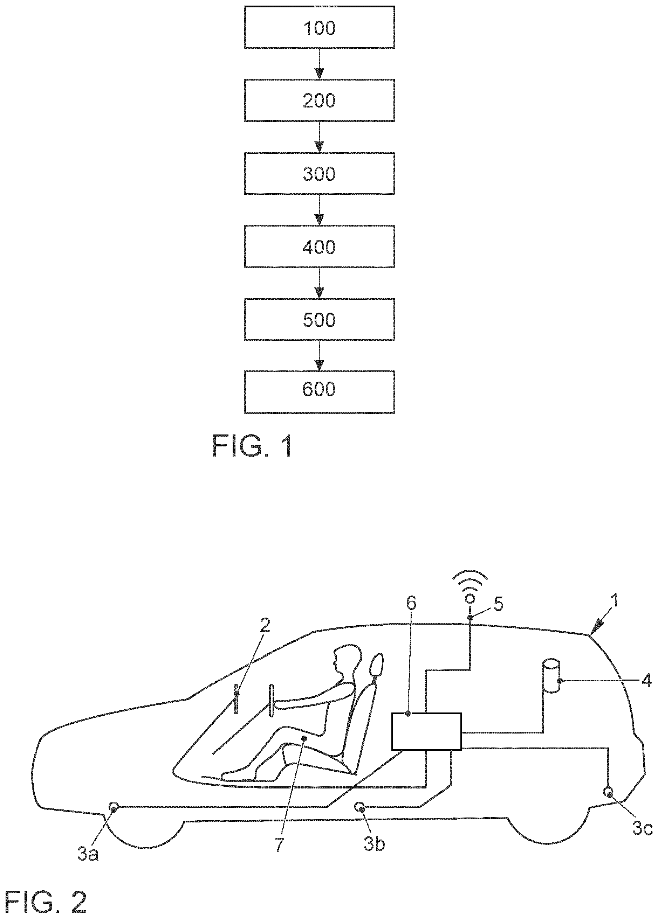

Fig.1 zeigt ein Flussdiagramm einer Ausführungsform des erfindungsgemäßen Verfahrens. Demnach wird in einem ersten Schritt 100 eine Umgebung mittels einer Kamera 3 a-c analysiert. In einem zweiten Schritt 200 wird die durch die Kamera 3 a-c analysierte Umgebung ausgewertet, indem anhand der Kontraste der Umgebung, im vorliegenden Fall der analysierten Fahrbahn, ein Kurvenradius einer räumlich entfernten Kurve ermittelt wird. Dieser ermittelte Kurvenradius wird mit Referenzdaten bezüglich der zu engen Kurvenradien, welche eine Deaktivierung des Spurassistenten zufolge haben, verglichen. In einem dritten Schritt 300 wird in Abhängigkeit dieses Vergleiches ermittelt, ob ein zu enger Kurvenradius vorliegt. Im vorliegenden Fall stimmt der ermittelte Kurvenradius mit einer der Referenzdaten der zu engen Kurvenradien überein, was zum Ergebnis führt, dass ein entfernter Deaktivierungsbereich 8 für den Spurassistenten vorliegt. Weiterhin wird ermittelt, ob eine vordefinierte räumliche Entfernung von einem Kilometer gleich oder größer der räumlichen Entfernung zu der zu engen Kurve ist. Die zu enge Kurve befindet sich in einem Kilometer Entfernung. Im Ansprechen darauf erfolgt entsprechend in einem vierten Schritt 400 ein Ausgeben eines Hinweises, dass das Spurassistenzsystem in der zu engen Kurve in einem Kilometer deaktiviert wird. In einem fünften Schritt 500 erfolgen das Aufzeichnen der Deaktivierung des Spurassistenzsystems und das Hinterlegen in einen Verlauf auf dem Speicher 4 des Fortbewegungsmittels 10. In Schritt 600 erfolgt ein Ausgeben einer kartographischen Darstellung der Deaktivierung des Spurassistenzsystems als Icon basierend auf dem aufgezeichneten Verlauf.

Fig. 2 illustriert eine Ausführungsform des erfindungsgemäßen Automobils 1. Das Automobil 1 umfasst drei Kameras 3a-c als Sensoren. Weiterhin umfasst das Automobil 1 eine Auswerteeinheit 6, welche mit dem Speicher 4 des Automobils 1, einem zentralen Informationsdisplay 2 zum Ausgeben des Hinweises an den Anwender 7 und mit einer Antenne 6 des Automobils verbunden ist. Über die Antenne 6 können, wie vorstehend beschrieben, aufgezeichnete Verläufe eines Betriebszustandes mit einem unzureichenden Verlässlichkeitsstatus empfangen bzw. versendet werden.

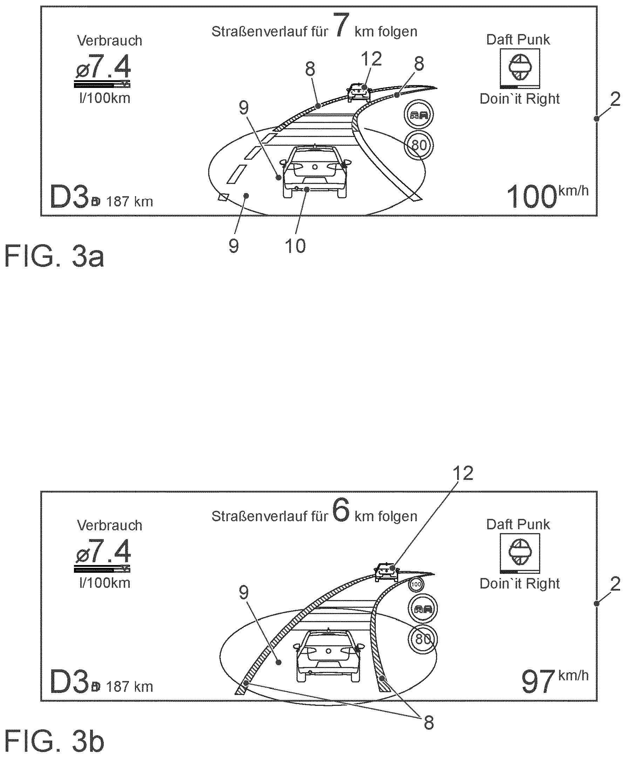

Fig. 3a illustriert eine Verbildlichung einer Ausführungsform des Schrittes des Ausgebens des Hinweises 400 des erfindungsgemäßen Verfahrens auf einem zentralen Informationsdisplay 2 bezüglich einer räumlich bevorstehenden Deaktivierung des Spurassistenzsystems. Eine Darstellung des Fortbewegungsmittels 10 auf der virtuellen Fahrbahn 9 zeigt hierbei an, dass der virtuelle Deaktivierungsbereich 8 des Spurassistenten räumlich entfernt ist, damit sich der Anwender 7 auf diese Situation einstellen kann.

Fig. 3b zeigt eine Verbildlichung eines Erreichens eines Deaktivierungsbereiches 8 in Bezug auf den Spurassistenten auf einem zentralen Informationsdisplay 2, was dadurch kenntlich gemacht ist, dass sich die Darstellung des Fortbewegungsmittels 10 auf der virtuellen Fahrbahn innerhalb des Deaktivierungsbereiches 8 befindet.

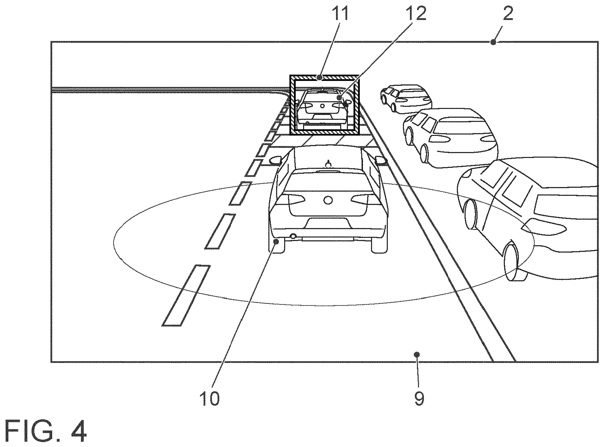

Fig. 4 zeigt eine Verbildlichung einer Ausführungsform des Schrittes des Ausgebens des Hinweises 400 des erfindungsgemäßen Verfahrens auf einem zentralen Informationsdisplay 2 bezüglich einer Deaktivierungsankündigung 11 des adaptiven

Geschwindigkeitsregelungssystems in Bezug auf ein vorausfahrendes Fortbewegungsmittel 12 für das Fortbewegungsmittel 10 des Anwenders 7 auf einer virtuellen Fahrbahn 9. Durch die Deaktivierungsankündigung 11 wird dem Anwender 7 angezeigt, dass das adaptive Geschwindigkeitsregelungssystem in Bezug auf das vorausfahrende Fortbewegungsmittel 12 nicht mehr geregelt wird, wenn er zu nahe an den Bereich der

Deaktivierungsankündigung 11 heranfährt. Der Anwender 7 kann demzufolge durch die rechtzeitige Deaktivierungsankündigung 11 das Bremsen selbst übernehmen, die Geschwindigkeit verringern, die Geschwindigkeit nicht erhöhen, was nicht zu einer Deaktivierung führt, oder einen Überholvorgang ausführen.

### Bezugszeichenliste

- 1: Automobil
- 2: Zentrales Informationsdisplay
- 3a-c: Kamera
- 4: Speicher
- 5: Antenne
- 6: Auswerteeinheit
- 7: Anwender
- 8: Deaktivierungsbereich
- 9: Fahrbahn
- 10: Fortbewegungsmittel
- 11: Deaktivierungsankündigung
- 12: Vorausfahrendes Fortbewegungsmittel
- 100-600: Verfahrensschritte

## Patentansprüche

1. Verfahren zum frühzeitigen Hinweisen auf einen Betriebsbereich mit einem unzureichenden Verlässlichkeitsstatus eines Assistenzsystems eines Fortbewegungsmittels (10) umfassend die Schritte:
- Analysieren (100) einer Situation und/oder Umgebung des Fortbewegungsmittels (10) in Bezug auf das Assistenzsystem durch eine Sensorik des Fortbewegungsmittels (10);
- Vergleichen (200) der durch die Sensorik analysierten Situation und/oder Umgebung mit einer vordefinierten Referenz umfassend kartographische Daten, in Abhängigkeit davon
- Ermitteln (300), ob ein vordefinierter zeitlicher und/oder räumlicher Bezug zu dem Betriebsbereich mit dem unzureichenden Verlässlichkeitsstatus des Assistenzsystems vorliegt und im Ansprechen darauf
- Ausgeben (400) eines Hinweises an einen Anwender (7), wenn ein vordefinierter zeitlicher und/oder räumlicher Bezug zu dem Betriebsbereich mit dem unzureichenden Verlässlichkeitsstatus des Assistenzsystems vorliegt;
wobei das Verfahren durch folgende Schritte gekennzeichnet wird :
- Aufzeichnen (500) eines Verlaufes der Betriebsbereiche mit dem unzureichenden Verlässlichkeitsstatus des Assistenzsystems und/oder der Funktionsgüte des Assistenzsystems,
wobei aufgezeichnete Verläufe auf einer Strecke, welche mehrmals gefahren wurde, miteinander korreliert werden, sodass eine Häufigkeit bezüglich der Betriebszustände mit einem unzureichenden Verlässlichkeitsstatus errechnet wird; und
- Ausgeben (600) einer kartographischen Darstellung basierend auf dem aufgezeichneten Verlauf der Betriebsbereiche mit dem unzureichenden Verlässlichkeitsstatus des Assistenzsystems,
wobei die kartographische Darstellung in Form einer Heatmap bezüglich der Häufigkeit der örtlichen Fehlfunktionen des Assistenzsystems ausgegeben sind, welche in den korrelierten Verläufen dokumentiert sind.

2. Verfahren nach Anspruch 1, wobei die vordefinierte Referenz
- Daten zu einem Reiseassistenzsystem und/oder
- Daten zur adaptiven Geschwindigkeitsregelung und/oder
- Daten zu einem Spurassistenzsystem und/oder
- Daten zu einem Parkassistenzsystem
umfasst.

3. Verfahren nach Anspruch 1 oder 2, wobei das Ausgeben des Hinweises (100) akustisch und/oder haptisch und/oder optisch erfolgt.

4. Verfahren nach einem der vorstehenden Ansprüche, wobei der Hinweis keine Aufforderung zur Übernahme einer Funktion des Assistenzsystems und/oder eine graphische Darstellung der Spurmarkierung (9, 13), insbesondere einen Farbwechsel und/oder ein Blinken und/oder ein größenmäßiges Hervorheben und/oder ein Umrahmen und/oder ein Schraffieren eines Bereiches der graphischen Darstellung, umfasst.

5. Verfahren nach einem der vorstehenden Ansprüche, wobei das Ermitteln (300) anhand eines Kontrastes und/oder einer Entfernung und/oder einer Komplexität der Situation und/oder eines Signal-zu-Rausch-Verhältnisses in Bezug auf das Fahrassistenzsystem erfolgt.

6. Verfahren nach einem der vorstehenden Ansprüche, wobei das Assistenzsystem ein Spurassistenzsystem und/oder ein adaptives Geschwindigkeitsregelungssystem und/oder ein Reiseassistenzsystem und/oder ein Einparkassistenzsystem umfasst.

7. Verfahren nach einem der vorstehenden Ansprüche, wobei die Sensorik optische Sensoren und/oder akustische Sensoren und/oder radiometrische Sensoren umfasst.

8. Verfahren nach einem der vorstehenden Ansprüche ferner umfassend den Schritt eines Quittierens einer vorgeschlagenen temporären Deaktivierung bzw. Teildeaktivierung des Assistenzsystems und/oder eines Abfragens einer Übernahmebereitschaft hinsichtlich einer Funktion des Assistenzsystems.

9. Verfahren nach einem der vorstehenden Ansprüche ferner umfassend den Schritt eines Ausgebens einer situativen bzw. aktuellen Anzeige bezüglich einer Funktionsgüte des Assistenzsystems.

10. Verfahren nach einem der vorstehenden Ansprüche, wobei der vordefinierte räumliche und/oder zeitliche Bezug sich in einer räumlichen und/oder zeitlichen Entfernung ausgehend von dem Fortbewegungsmittel (10) befindet, wobei die räumliche Entfernung 10 m bis 5000 m beträgt und/oder die zeitliche Entfernung 5 s bis 300 s beträgt.

11. System, welches eingerichtet ist, ein Verfahren nach einem der vorstehenden Ansprüche durchzuführen.

12. Automobil (1) umfassend ein System nach Anspruch 11.

## Claims

1. Method for early indication of an operating range with an insufficient reliability status of an assistance system of a transportation means (10), comprising the steps of:
- analyzing (100) a situation and/or surroundings of the transportation means (10) with respect to the assistance system using a sensor system of the transportation means (10);
- comparing (200) the situation and/or surroundings analyzed using the sensor system with a predefined reference comprising cartographic data, and on the basis thereof
- determining (300) whether there is a predefined temporal and/or spatial relationship to the operating range with the insufficient reliability status of the assistance system, and in response thereto
- outputting (400) an indication to a user (7) if there is a predefined temporal and/or spatial relationship to the operating range with the insufficient reliability status of the assistance system;
the method being **characterized by** the following steps:
- recording (500) a profile of the operating ranges with the inadequate reliability status of the assistance system and/or the functional quality of the assistance system,
recorded profiles on a route which has been traveled several times being correlated with one another, such that a frequency is calculated with regard to the operating states with an insufficient reliability status; and
- outputting (600) a cartographic representation based on the recorded profile of the operating ranges with the insufficient reliability status of the assistance system,
the cartographic representation being output in the form of a heat map relating to the frequency of local malfunctions of the assistance system, which are documented in the correlated profiles.

2. Method according to claim 1, wherein the predefined reference comprises
- data relating to a travel assistance system and/or
- data relating to adaptive cruise control and/or
- data relating to a lane assistance system and/or
- data relating to a parking assistance system.

3. Method according to claim 1 or 2, wherein the indication (100) is output acoustically and/or haptically and/or optically.

4. Method according to any of the preceding claims, wherein the indication does not comprise a request to take over a function of the assistance system and/or comprises a graphical representation of the lane marking (9, 13), in particular a color change and/or blinking and/or size-related highlighting and/or framing and/or hatching of a region of the graphical representation.

5. Method according to any of the preceding claims, wherein the determination (300) takes place on the basis of a contrast and/or a distance and/or a complexity of the situation and/or a signal-to-noise ratio with respect to the driver assistance system.

6. Method according to any of the preceding claims, wherein the assistance system comprises a lane assistance system and/or an adaptive cruise control system and/or a travel assistance system and/or a parking assistance system.

7. Method according to any of the preceding claims, wherein the sensor system comprises optical sensors and/or acoustic sensors and/or radiometric sensors.

8. Method according to any of the preceding claims, further comprising the step of confirming a proposed temporary deactivation or partial deactivation of the assistance system and/or querying a takeover readiness with regard to a function of the assistance system.

9. The method according to any of the preceding claims, further comprising the step of outputting a situational or current display relating to a functional quality of the assistance system.

10. Method according to any of the preceding claims, wherein the predefined spatial and/or temporal relationship is a spatial and/or temporal distance from the transportation means (10), wherein the spatial distance is 10 m to 5000 m and/or the time interval is 5 s to 300 s.

11. System which is designed to implement a method according to any of the preceding claims.

12. Automobile (1) comprising a system according to claim 11.

## Revendications

1. Procédé permettant l'indication précoce d'une plage de fonctionnement comportant un état de fiabilité insuffisant d'un système d'aide d'un moyen de déplacement (10) comprenant les étapes consistant à :
- analyser (100) une situation et/ou un environnement du moyen de déplacement (10) par rapport au système d'aide par un agencement de capteurs du moyen de déplacement (10) ;
- comparer (200) la situation et/ou l'environnement analysés par l'agencement de capteurs avec une référence prédéfinie comprenant des données cartographiques, en fonction de ceci
- déterminer (300) si un rapport temporel et/ou spatial prédéfini avec la plage de fonctionnement comportant l'état de fiabilité insuffisant du système d'aide existe et, en réponse à ceci
- émettre (400) une indication à un utilisateur (7) lorsqu'un rapport temporel et/ou spatial prédéfini avec la plage de fonctionnement comportant l'état de fiabilité insuffisant du système d'aide existe ;
dans lequel le procédé est **caractérisé par** les étapes suivantes :
- enregistrement (500) d'un historique des plages de fonctionnement comportant l'état de fiabilité insuffisant du système d'aide et/ou de la qualité de fonctionnement du système d'aide,
dans lequel des historiques enregistrés sur un trajet qui a été parcouru plusieurs fois sont mutuellement corrélés, de sorte qu'une récurrence concernant les états de fonctionnement comportant un état de fiabilité insuffisant est calculée ; et
- émission (600) d'une représentation cartographique sur la base de l'historique enregistré des plages de fonctionnement comportant l'état de fiabilité insuffisant du système d'aide,
dans lequel la représentation cartographique est émise sous la forme d'une carte thermique concernant la récurrence des dysfonctionnements locaux du système d'aide qui sont documentés dans les historiques corrélés.

2. Procédé selon la revendication 1, dans lequel la référence prédéfinie comprend
- des données relatives à un système d'aide au trajet et/ou
- des données relatives à la régulation de vitesse adaptative et/ou
- des données relatives à un système d'aide au maintien dans la voie et/ou
- des données relatives à un système d'aide au stationnement.

3. Procédé selon la revendication 1 ou 2, dans lequel l'émission de l'indication (100) est effectuée de manière acoustique et/ou haptique et/ou optique.

4. Procédé selon l'une des revendications précédentes, dans lequel l'indication ne comprend pas de demande de prise de contrôle d'une fonction du système d'aide et/ou comprend une représentation graphique du marquage de voie (9, 13), en particulier un changement de couleur et/ou un clignotement et/ou une mise en évidence dimensionnelle et/ou un encadrement et/ou une hachure d'une zone de la représentation graphique.

5. Procédé selon l'une des revendications précédentes, dans lequel la détermination (300) est effectuée au moyen d'un contraste et/ou d'une distance et/ou d'une complexité de la situation et/ou d'un rapport signal/bruit par rapport au système d'aide à la conduite.

6. Procédé selon l'une des revendications précédentes, dans lequel le système d'aide comprend un système d'aide au maintien dans la voie et/ou un système de régulation de vitesse adaptatif et/ou un système d'aide au trajet et/ou un système d'aide au stationnement.

7. Procédé selon l'une des revendications précédentes, dans lequel l'agencement de capteurs comprend des capteurs optiques et/ou des capteurs acoustiques et/ou des capteurs radiométriques.

8. Procédé selon l'une des revendications précédentes, comprenant en outre l'étape de confirmation d'une désactivation ou désactivation partielle temporaire proposée du système d'aide et/ou d'une interrogation d'une disponibilité de prise de contrôle concernant une fonction du système d'aide.

9. Procédé selon l'une des revendications précédentes, comprenant en outre l'étape d'émission d'une notification situationnelle ou actuelle concernant une qualité de fonctionnement du système d'aide.

10. Procédé selon l'une des revendications précédentes, dans lequel le rapport temporel et/ou spatial prédéfini se situe à une distance spatiale et/ou temporelle en partant du moyen de déplacement (10), dans lequel la distance spatiale est de 10 m à 5 000 m et/ou la distance temporelle est de 5 s à 300 s.

11. Système configuré pour exécuter un procédé selon l'une des revendications précédentes.

12. Véhicule automobile (1) comprenant un système selon la revendication 11.
